# EUROPÄISCHE PATENTSCHRIFT

(11) **EP 2 401 134 B1**
(45) Veröffentlichungstag und Bekanntmachung des Hinweises auf die Patenterteilung: **25.11.2015**
(21) Anmeldenummer: 10706931.2
(22) Anmeldetag: 22.02.2010
(51) Int. Cl.: B29C 65/40, B29C 47/38

(54) **HANDSCHWEISSEXTRUDER MIT EINSTÜCKIGEM SCHWEISSSCHUH AUS KUNSTSTOFF**
HAND-HELD WELDING EXTRUDER COMPRISING A ONE-PIECE WELDING SHOE MADE OF PLASTIC
EXTRUDEUSE-SOUDEUSE MANUELLE COMPRENANT UNE SEMELLE DE SOUDAGE MONOBLOC EN PLASTIQUE

(30) Priorität: 26.02.2009 DE 202009002656 U
(43) Veröffentlichungstag der Anmeldung: 04.01.2012
(73) Patentinhaber: Dohle Extrusionstechnik GmbH, 53809 Ruppichteroth (DE)
(72) Erfinder: DOHLE, Peter, Christian, 53809 Ruppichteroth (DE)
(74) Vertreter: Fritz, Edmund Lothar
(86) Internationale Anmeldenummer: PCT/EP2010/001090
(87) Internationale Veröffentlichungsnummer: WO 2010/097189

(56) Entgegenhaltungen:
- EP-A1- 1 637 234
- EP-A2- 0 060 482
- DE-A1- 3 520 817
- DE-A1-102005 044 465
- DE-A1-102006 035 250
- GB-A- 1 232 076

## Beschreibung

Die vorliegende Erfindung betrifft einen Handschweißextruder umfassend eine Extrudereinheit mit Extruderschnecke und Extruderdüse, an die sich in Förderrichtung des Extrudats ein gegenüber einem Extrudergehäuse vorstehender Düsenrohrabschnitt anschließt mit einem inneren Kanal, aus dem das Extrudat austritt, sowie weiter umfassend einen Schweißschuh am vorderen Ende des Geräts, über den das Schmelzgut ausgebracht wird, wobei der Schweißschuh auf dem Düsenrohrabschnitt befestigbar ist.

Für das Kunststoffschweißen werden heute üblicherweise Handschweißextruder verwendet, bei denen über einen Drahteinzug das Schweißmaterial einer Extruderschnecke zugeführt und von dieser granuliert wird. Die Extruderschnecke drückt das Granulat in die Schmelzkammer, wo es aufgeschmolzen wird und aus der Extruderdüse austritt. Die Fügeteile werden mittels einer an dem Handschweißextruder angebrachten Heißluftdüse auf die Schweißtemperatur erwärmt. Zur schweißnahtbildenden Ausbringung des Schmelzguts auf die zu verschweißenden Fügeteile wird ein Schweißschuh verwendet, der auf dem vorderen Endbereich des Düsenrohrs der Extruderdüse befestigbar ist. Für unterschiedliche Anwendungszwecke werden je nach Form der herzustellenden Schweißnaht entsprechend geformte Schweißschuhe eingesetzt. Es ist aus dem Stand der Technik bekannt, Schweißschuhe zu verwenden, die teilweise aus Kunststoffen wie PTFE (Teflon) bestehen, wie dies beispielsweise in der DE 10 2005 044 465 A1 beschrieben ist.

Bei den handelsüblichen Geräten besteht jedoch nur der vordere Abschnitt des Schweißschuhs aus Kunststoff, während der hintere Abschnitt, welcher mit dem Düsenrohr verbunden wird, aus Metall besteht. Auch in der DE 20 2007 014 873 U1 kann man einen solchen zweiteiligen Schweißschuh erkennen. Der metallische hintere Abschnitt des Schweißschuhs wird mittels einer radialen Schraube auf einen vorderen Abschnitt des Düsenrohrs geschraubt. Das Problem bei diesen bekannten Schweißschuhen besteht darin, dass sich die beiden Abschnitte aufgrund der unterschiedlichen Werkstoffe bei Erwärmung verschieden stark ausdehnen. Im Bereich der Naht zwischen beiden Abschnitten des Schweißschuhs kommt es daher zur Ausbildung von Spalten. Wenn bei Temperaturen von 250 ° C die Kunststoffschmelze mit Druck durch das Düsenrohr gepresst wird und in den Kanal des Schweißschuhs gelangt, entstehen in diesem kritischen Bereich zwischen den Abschnitten aus verschiedenen Werkstoffen Undichtigkeiten, an denen Kunststoffschmelze austreten kann. Der Schweißschuh wird dadurch verunreinigt und nach Erkalten der Schmelze lassen sich diese Verunreinigungen oft nicht mehr entfernen, so dass der Schweißschuh unbrauchbar wird. Auch die Trennung des Schweißschuhs von der Düse bei einem notwendigen Wechsel des Schweißschuhs kann aufgrund der Verunreinigungen mit Schwierigkeiten verbunden sein.

Die Druckschrifen DE 35 20 817 A1, GB 1 232 076 A, EP 0 060 482 A2 und EP 1 637 234 A1 offenbaren weitere Handschweissextruder.

Die Aufgabe der vorliegenden Erfindung besteht darin, einen Handschweißextruder der eingangs genannten Gattung zur Verfügung zu stellen, bei dem der Schweißschuh so beschaffen ist, dass die genannten Undichtigkeiten nicht mehr auftreten.

Die Lösung dieser Aufgabe liefert ein Handschweißextruder der eingangs genannten Gattung mit den kennzeichnenden Merkmalen des Hauptanspruchs. Erfindungsgemäß ist vorgesehen, dass ein einstückiger Schweißschuh aus Kunststoff vorgesehen ist, der sowohl einen schweißnahtbildenden vorderen Abschnitt als auch einen auf dem Düsenrohr zu befestigenden mittleren und/oder hinteren Abschnitt des Schweißschuhs umfasst.

Erfindungsgemäß ist der mittlere und/oder hintere Abschnitt des Schweißschuhs, welcher dazu dient, diesen auf dem Düsenrohrabschnitt des Handschweißextruders festzulegen, wenigstens abschnittsweise zylindrisch ausgebildet. Dies eröffnet die Möglichkeit, beispielsweise zur Befestigung des Schweißschuhs auf dem Düsenrohrabschnitt eine Schlauchschelle vorzusehen, welche ringförmig um diesen zylindrischen Abschnitt legbar ist und im gespannten Zustand den Schweißschuh auf dem Düsenrohrabschnitt festklemmt.

Gemäß einer bevorzugten Weiterbildung der erfindungsgemäßen Aufgabenlösung kann sich an den zylindrischen Abschnitt des Schweißschuhs ein ringförmiger gegenüber dem zylindrischen Abschnitt radial überstehender Bund anschließen. Ein solcher Bund bildet dann quasi einen Anschlag für die zur Befestigung dienende Schlauchschelle, so dass diese nicht von dem zylindrischen Abschnitt rutschen kann.

Der zylindrische Abschnitt erstreckt sich erfindungsgemäß zwischen diesem Bund und einem gegenüber dem zylindrischen Abschnitt allseits nach außen hin überstehenden schweißnahtbildenden blockartigen vorderen Abschnitt welcher unterschiedlichste Formen annehmen kann, je nachdem welche Art von Schweißnaht herzustellen ist. In den meisten Fällen weist dieser schweißnahtbildende vordere Abschnitt des Schweißschuhs einen eckigen Umriss auf. Da dieser Abschnitt ebenso wie der Bund gegenüber dem zylindrischen Abschnitt nach außen hin übersteht, ist für eine zur Befestigung verwendete Schelle an beiden Enden des zylindrischen Abschnitts ein Anschlag gegen eventuelle axiale Bewegungen bei der Montage und vor dem Spannen der Schelle gegeben. Im Bereich des zylindrischen Abschnitts ist die Materialstärke des Schweißschuhs geringer, so dass bei Spannen der Schelle der Kunststoff des Schweißschuhs aufgrund seiner Elastizität in ausreichendem Masse in radialer Richtung gequetscht werden kann, um so die erforderliche Kraft für die Festlegung des Schweißschuhs auf dem Düsenrohrabschnitt zu schaffen.

Besonders vorteilhaft ist, dass durch die erfindungsgemäße Lösung der Schweißschuh einstückig aus einem einheitlichen Material ausgebildet ist, so dass es keine Abschnitte mit unterschiedlichen Wärmeausdehnungskoeffizienten mehr gibt und sich bei Erwärmung keine Spalte mehr bilden können. Ein Austreten von Extrudat aus dem Düsenrohr im Bereich des Schweißschuhs ist daher nicht mehr möglich. Durch Lösen der Schelle lässt sich nun der Schweißschuh ganz einfach demontieren. Es gibt keine Verunreinigungen durch Rückstände von verfestigtem Extrudat mehr, welche das Austauschen des Schweißschuhs erschweren würden.

Vorzugsweise besteht der gesamte einstückige Schweißschuh aus PTFE oder anderen für Hochtemperaturanwendungen geeigneten Kunststoffen. Diese Kunststoffe lasen sich mechanisch bearbeiten, so dass der einstückige Schweißschuh problemlos aus einem Materialblock hergestellt werden kann.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine perspektivische Ansicht des vorderen Abschnitts eines Handschweißextruders gemäß einer möglichen Ausführungsvariante der vorliegenden Erfindung;
Figur 2 einen vergrößerten Längsschnitt durch den vorderen Abschnitt eines Handschweißextruders gemäß der vorliegenden Erfindung;
Figur 3 eine perspektivische Draufsicht auf den vorderen Abschnitt des Handschweißextruders von Figur 1.

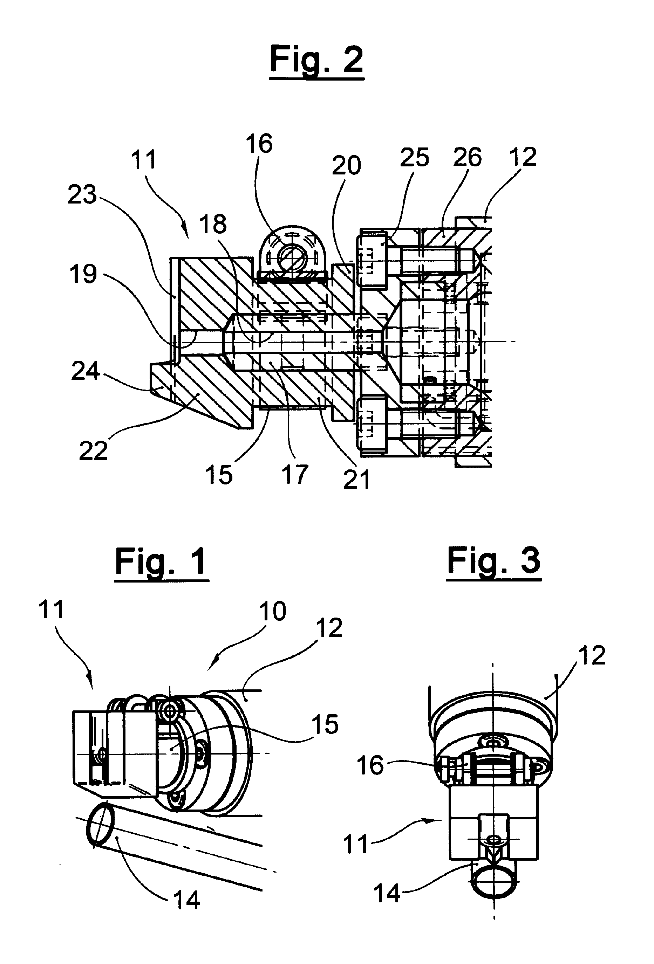

Zunächst wird auf die Figur 1 Bezug genommen, die nur den vorderen Bereich eines beispielhaften Handschweißextruders 10 mit einem erfindungsgemäßen Schweißschuh 11 zeigt. In der Ansicht erkennt man weiterhin den vorderen Teil des Extrudergehäuses 12 sowie den vorderen Abschnitt der Heißluftdüse 14 über die Heißluft zugeführt wird, die in der Nähe des Schweißschuhs austritt, um dort die zu fügenden Werkstücke vorzuwärmen und somit auf die Schweißtemperatur zu bringen.

Aus der weiteren perspektivischen Ansicht gemäß Figur 3, bei der man im Prinzip von oben auf den vorderen Bereich des in Figur 1 dargestellten Handschweißextruders 10 schaut, erkennt man die Schelle 15 mit Spannvorrichtung 16, mittels derer der Schweißschuh 11 auf dem Düsenrohrabschnitt befestigbar ist. Diese Befestigung wird nachfolgend unter Bezugnahme auf die Schnittansicht gemäß Figur 2 näher erläutert.

Es ist ein aus dem Extrudergehäuse 12 nach vorn hin vorragender Düsenrohrabschnitt 17 vorhanden, innerhalb dessen sich ein Kanal 18 befindet, durch den die aus der Extruderdüse geförderte Schmelze austritt und in einen Kanal 19 des Schweißschuhs gelangt. Der Düsenrohrabschnitt 17 ist rückseitig beispielsweise über achsparallele Schrauben 25 mit der Extrudereinheit 26 verbunden. Der Schweißschuh 11 ist auf diesem Düsenrohrabschnitt 17 mittels einer Schlauchschelle 15 befestigt. Der Schweißschuh 11 umfasst von seinem hinteren dem Extrudergehäuse 12 zugewandten Ende ausgehend zu seinem vorderen Ende hin einen endseitigen zylindrischen Bund 20, einen zylindrischen Abschnitt 21, auf dem sich die Schlauchschelle 15 befindet und einen schweißnahtbildenden vorderen blockförmigen Abschnitt 22, die alle drei miteinander einstückig ausgebildet sind. Im Bereich des zylindrischen Abschnitts 21 ist der Durchmesser des Schweißschuhs geringer als im Bereich des hinteren Bundes 20, wobei auch die Materialstärke in dem zylindrischen Abschnitt 21 geringer ist, da der Schweißschuh den Düsenrohrabschnitt 17 konzentrisch umgibt und letzterer im Bereich des Bundes 20 und des zylindrischen Abschnitts 21 des Schweißschuhs 11 einen gleichbleibenden Außendurchmesser hat.

Nach vorn hin geht der Kanal 18 im Inneren des Düsenrohrabschnitts 17 in den Kanal 19 des Schweißschuhs 11 über, durch den das aufgeschmolzene Extrudat fließt. Dieser Kanal 19 befindet sich in dem schweißnahtbildenden blockförmigen Abschnitt 22, welcher zur Ausbildung der Schweißnaht dient. In diesem Abschnitt 22 befindet sich auch in an sich bekannter Weise eine Nut 23 für die Schmelze, die außen an dem Abschnitt 22 in senkrechter Richtung zur Achse des Kanals 19 verläuft. Außerdem ist vorderseitig außen an diesem Abschnitt 22 eine Nase 24 geformt, die unterhalb der Öffnung des Kanals 19 angeordnet ist und gewährleistet, dass das Schmelzgut nur in einer gewünschten Richtung austritt.

Der vordere blockförmige Abschnitt 22, der mittlere zylindrische Abschnitt 21 und der hintere radial überstehende Bund 20 sind einstückig gebildet aus einem geeigneten Kunststoff, der ausreichend temperaturbeständig ist und sich mechanisch durch Fräsen, Bohren etc. bearbeiten lässt, insbesondere eignet sich PTFE als Kunststoff für den Schweißschuh. Zwischen vorderem Abschnitt 22 und mittleren zylindrischen Abschnitt 21 einerseits und zwischen mittlerem zylindrischen Abschnitt 21 und hinterem Bund 20 andererseits sind jeweils Durchmesserversprünge bzw. Absätze gebildet, so dass sich eine radial zurückliegende zylindrische Fläche an dem zylindrischen Abschnitt 21 ergibt. In diesem Bereich sitzt der Schweißschuh 11 koaxial auf dem Düsenrohrabschnitt 17.

Um den Schweißschuh 11 auf dem Düsenrohrabschnitt 17 zu befestigen, ist eine Schelle, insbesondere Schlauchschelle 15 vorgesehen, deren Band um den zylindrischen Abschnitt 21 herum gelegt wird. Anschließend kann mittels einer Spannvorrichtung 16 über eine Spannschraube oder dergleichen die Schlauchschelle gespannt werden, so dass der zylindrische Abschnitt 21 zusammengepresst und der Schweißschuh dicht und sicher auf dem Düsenrohrabschnitt festgelegt wird. Da der gesamte Schweißschuh 11 einstückig ist, gibt es auch keine Übergänge mit Spalten zwischen den einzelnen Abschnitten, an denen Schmelze aus dem Kanal 18, 19 austreten könnte. Ebenso ist der Werkstoff für den gesamten Schweißschuh einheitlich, so dass es keine Bereiche mit unterschiedlichen Wärmeausdehnungskoeffizienten gibt.

### Bezugszeichenliste

- 10: Handschweißextruder
- 11: Schweißschuh
- 12: Extrudergehäuse
- 14: Heißluftdüse
- 15: Schelle
- 16: Spannvorrichtung
- 17: Düsenrohrabschnitt
- 18: Schmelzekanal
- 19: Kanal im Schweißschuh
- 20: Bund
- 21: zylindrischer Abschnitt
- 22: vorderer Abschnitt
- 23: Nut
- 24: Nase
- 25: Schrauben
- 26: Extrudereinheit

## Patentansprüche

1. Handschweißextruder umfassend eine Extrudereinheit mit Extruderschnecke und Extruderdüse, an die sich in Förderrichtung des Extrudats ein gegenüber einem Extrudergehäuse vorstehender Düsenrohrabschnitt anschließt mit einem inneren Kanal, aus dem das Extrudat austritt, sowie weiter umfassend einen Schweißschuh am vorderen Ende des Geräts, über den das Schmelzgut ausgebracht wird, wobei der Schweißschuh auf dem Düsenrohrabschnitt befestigbar ist,
wobei ein einstückiger Schweißschuh (11) aus Kunststoff vorgesehen ist, der sowohl einen schweißnahtbildenden vorderen Abschnitt (22) als auch einen auf dem Düsenrohrabschnitt (17) zu befestigenden mittleren und/oder hinteren Abschnitt (21, 20) des Schweißschuhs umfasst,
wobei der mittlere und/oder hintere Abschnitt (21) des Schweißschuhs mindestens abschnittsweise zylindrisch ausgebildet ist,
**dadurch gekennzeichnet, dass** der zylindrische Abschnitt (21) geringere äußere Abmessungen (geringerer Durchmesser) aufweist als der schweißnahtbildende vordere Abschnitt (22) des einstückigen Schweißschuhs (11) aus Kunststoff, dass zur Befestigung des Schweißschuhs auf dem Düsenrohrabschnitt eine Schelle (15) vorgesehen ist, welche ringförmig um den zylindrischen Abschnitt (21) legbar Ist und Im gespannten Zustand den Schweißschuh (11) auf dem Düsenrohrabschnitt (17) festklemmt und dass der gegenüber dem zylindrischen Abschnitt (21) allseits nach außen hin überstehende schweißnahtbildende vordere Abschnitt (22) blockartig mit eckigem Umriss ausgebildet ist.

2. Handschweißextruder nach Anspruch 1,
**dadurch gekennzeichnet, dass** sich an einen zylindrischen Abschnitt (21) des Schweißschuhs ein ringförmiger gegenüber dem zylindrischen Abschnitt radial überstehender Bund (20) anschließt.

3. Handschweißextruder nach einem der Ansprüche 1 oder 2,
**dadurch gekennzeichnet, dass** der ringförmige Bund (20) einen Endabschnitt des einstückigen Schweißschuhs (11) aus Kunststoff bildet.

4. Handschweißextruder nach einem der Ansprüche 1 bis 3,
**dadurch gekennzeichnet, dass** der einstückige Schweißschuh (11) aus PTFE oder einem hoch temperaturfesten Kunststoff mit ähnlichen Eigenschaften besteht.

## Claims

1. A hand extruder comprising an extruder unit with an extruder screw and an extruder nozzle, which in conveying direction of the extrudate is joined to a nozzle tube section protruding with respect to an extruder housing and having an inner channel from which the extrudate emerges, and further comprising a welding shoe at the front end of the device via which the melt is delivered, wherein the welding shoe can be attached to the nozzle tube section,
wherein a one-piece plastic welding shoe (11) is provided, which comprises a weld-forming front section (22) as well as a central and/or rear section (21, 20) of the welding shoe, which is to be attached to the nozzle tube section (17),
wherein the central and/or rear section (21) of the welding shoe, at least in sections, is formed cylindrically,
**characterised in that** the cylindrical section (21) has smaller dimensions (lesser diameter) compared to the weld-forming front section (22) of the one-piece plastic welding shoe (11), **in that** a clamp (15) is provided for attaching the welding shoe to the nozzle tube section, which clamp can be placed concentrically around the cylindrical section (21) clamping the welding shoe (11) in position on the nozzle tube section (17), and **in that** the weld-forming front section (22) protruding outwardly on all sides relative to the cylindrical section (21) is formed as a block with an angular outline.

2. The hand extruder according to claim 1,
**characterised in that** a cylindrical section (21) of the welding shoe is joined to a ring-shaped collar (20) which radially protrudes relative to the cylindrical section.

3. The hand extruder according to one of claims 1 or 2,
**characterised in that** the ring-shaped collar (20) forms an end section of the one-piece plastic welding shoe (11).

4. The hand extruder according to one of claims 1 to 3,
**characterised in that** the one-piece welding shoe (11) consists of PTFE or highly temperature-resistant plastic with similar properties.

## Revendications

1. Soudeuse-extrudeuse manuelle comprenant une unité extrudeuse avec une vis sans fin d'extrudeuse et une filière d'extrusion sur laquelle se raccorde dans la direction de transport du produit d'extrusion un tronçon de tube de tuyère débordant par rapport au fourreau de l'extrudeuse, avec un canal intérieur hors duquel sort le produit d'extrusion et comprenant par ailleurs sur l'extrémité antérieure de l'appareil un patin de soudage, par l'intermédiaire duquel le métal à fondre est expulsé, le patin de soudage pouvant être fixé sur le tronçon de tube de tuyère,
un patin de soudage (11) en monobloc en matière plastique étant prévu qui comprend aussi bien une partie antérieure (22) formant la soudure qu'une partie médiane et/ou postérieure (21, 20) du patin de soudage, destinée à être fixée sur le tronçon de tube (17) de tuyère,
la partie (21) médiane et/ou postérieure du patin de soudage étant conçue au moins par parties sous forme cylindrique,
**caractérisée en ce que** la partie cylindrique (21) présente des dimensions extérieures plus réduites (un diamètre plus réduit) que la partie antérieure (22) formant le cordon de soudure du patin de soudage (11) en monobloc en matière plastique, **en ce que** pour fixer le patin de soudage sur le tronçon de tube de tuyère, il est prévu un étrier (15) que l'on peut poser sous forme annulaire autour de la partie cylindrique (21) et qui dans l'état tendu serre le patin de soudage (11) sur le tronçon de tube (17) de tuyère et **en ce que** la partie antérieure (22) formant la soudure, débordant vers l'extérieur de toute part par rapport à la partie cylindrique (21) est conçue à la manière d'un bloc, avec un contour anguleux.

2. Soudeuse-extrudeuse manuelle selon la revendication 1,
**caractérisée en ce que** sur une partie cylindrique (21) du patin de soudage se raccorde une collerette (20) annulaire, débordant en direction radiale par rapport à la partie cylindrique.

3. Soudeuse-extrudeuse selon l'une quelconque des revendications 1 ou 2,
**caractérisée en ce que** la collerette (20) annulaire forme une partie d'extrémité du patin de soudage (11) en monobloc en matière plastique.

4. Soudeuse-extrudeuse selon l'une quelconque des revendications 1 à 3,
**caractérisée en ce que** le patin de soudage (11) en monobloc est constitué de PTFE ou d'une matière plastique résistant à de hautes températures, présentant des propriétés analogues.
